# Europäisches Patentamt

# European Patent Office

# Office européen des brevets

(11) Veröffentlichungsnummer: **0 065 509**
**B1**

(12) **EUROPÄISCHE PATENTSCHRIFT**

(45) Veröffentlichungstag der Patentschrift:
**06.11.85**

(21) Anmeldenummer: **82890064.7**

(22) Anmeldetag: **04.05.82**

(51) Int. Cl.⁴: **A 01 K 27/00**

(54) **Schutz- bzw. Haltegurt für Kleintiere.**

(30) Priorität: **19.05.81 AT 2239/81**

(43) Veröffentlichungstag der Anmeldung:
**24.11.82 Patentblatt 82/47**

(45) Bekanntmachung des Hinweises auf die Patenterteilung:
**06.11.85 Patentblatt 85/45**

(84) Benannte Vertragsstaaten:
**BE CH DE FR GB LI NL**

(56) Entgegenhaltungen:
**FR - A - 2 233 931**
**US - A - 3 948 222**
**US - A - 4 292 932**

(73) Patentinhaber: **Mader, Gerhard, Barawitzkagasse 26,**
**A-1190 Wien (AT)**
Patentinhaber: **Teuchtler, Jean-Marc,**
**Windmühlgasse 10, A-1060 Wien (AT)**

(72) Erfinder: **Mader, Gerhard, Barawitzkagasse 26,**
**A-1190 Wien (AT)**
Erfinder: **Teuchtler, Jean-Marc, Windmühlgasse 10,**
**A-1060 Wien (AT)**

(74) Vertreter: **Pawloy, Heinrich, Dr. et al, Riemergasse 14,**
**A-1010 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung bezieht sich auf einen Schutz- bzw. Haltegurt für Kleintiere, insbesondere Hunde, mit welchem diese in einem Kraftfahrzeug sicher an ihrem Platz gehalten werden können.

Wenn Kleintiere, insbesondere Hunde, in einem Kraftfahrzeug transportiert werden sollen, so ergeben sich für den Fahrzeuglenker mehrere Probleme. Als erstes derartiges Problem wäre zu erwähnen, dass das Tier leicht durch plötzliche Bewegungen des Fahrzeuglenkers irritiert bzw. erschreckt werden kann, so dass es als Instinkthandlung den Fahrzeuglenker anspringt und diesen gegebenenfalls sogar beisst. Derartige Instinkthandlungen von ansonsten gut erzogenen Tieren können dann in der Folge schwere Verkehrsunfälle verursachen, wobei unter Umständen nicht nur der Fahrzeuglenker, sondern auch andere Verkehrsteilnehmer zu Schaden kommen können. Weiterhin besteht die Möglichkeit, dass im Falle eines an sich vielleicht nicht gar so schweren Unfalles das Tier in seiner instinktmässigen Panikhandlung und im Bestreben, das Unfallsfahrzeug zu verlassen, die mehr oder weniger verletzten Insassen des Wagens zusätzlich verletzt. Schliesslich scheint es auch aus rein tierfreundlichen Erwägungen zweckmässig, auch das mitgeführte Tier für den Fall eines möglichen Unfalles vor Schäden zu bewahren, die das Tier erleiden könnte, wenn es bei einer abrupten Abbremsung des Wagens durch diesen geschleudert wird.

Es hat nun nicht an Versuchen gefehlt, diese Probleme zu lösen und Vorrichtungen vorzusehen, durch welche die im Wagen mitgeführten Tiere sicher an ihrem Platz gehalten werden können. So ist beispielsweise ein Sicherheitsgurt auch für Hunde bekannt, welcher aus einem oder mehreren über die Lehne des Kraftfahrzeuges vertikal gespannten Bändern besteht, welche Bänder ihrerseits daran auf- und abgleitbar aufgefädelte Ringe aufweisen, in welche Ringe ein Brustgeschirr über ein Zwischenglied mittels eines Karabinerhakens eingehängt werden kann. Diese Sicherheitsvorrichtung hat sich bis dato nicht durchsetzen können, vermutlich deshalb, weil sowohl das Brustgeschirr als auch die im Fahrzeug verbleibende Befestigungsvorrichtung lediglich für diesen einen bestimmten Zweck vorgesehen ist und weiterhin das an der Lehne des Fahrzeugsitzes vorgesehene Band mit den darin vorgesehenen Ringen bei Benützung des Sitzes durch Menschen störend wirkt.

Die FR-A-2 233 931 beschreibt eine Sicherheitsbefestigungsvorrichtung für Tiere in Kraftfahrzeugen, bei welcher eine speziell angefertigte, in der Länge regulierbare Leine entweder an einer am Fahrzeug fix angebrachten Öse oder an einem um einen Vordersitz geschlungenen Riemen befestigt wird. Es muss somit eine besondere Halteleine verwendet werden; weiterhin ist entweder eine zusätzliche Befestigungsvorrichtung am Fahrzeug vorzusehen oder es wird ein Riemen um einen Vordersitz geschlungen, der insbesondere bei kräftigeren Tieren leicht verrutschen kann und keinen sicheren Halt am gewünschten Platz gewährleistet.

Eine noch kompliziertere Vorrichtung, die praktisch nur im Kraftfahrzeug verwendet werden kann, ist in der US-A-3 948 222 beschrieben. Das dort beschriebene Sicherheitsgeschirr ist zum Führen des Kleintieres ausserhalb des Fahrzeuges gänzlich ungeeignet und muss dem Tier bei Betreten des Wagens erst angelegt werden.

Die vorliegende Erfindung hat sich nun zur Aufgabe gesetzt, praktisch den gleichen Zweck, der durch die eben beschriebenen Vorrichtungen erzielt wird, durch Mittel zu erreichen, welche sowohl im Wagen als auch meistenteils bereits beim Kleintier vorhanden sind, wobei lediglich eine kleine und billige zusätzliche Vorrichtung angeschafft werden muss.

Die vorliegende Erfindung zeigt somit einen einfachen und billigen Weg, all diese Probleme zu lösen und eine Vorrichtung vorzusehen, die in ihrer Wirkung sicher ist.

Gegenstand der vorliegenden Erfindung ist somit ein Schutz- bzw. Haltegurt für Kleintiere, insbesondere Hunde, in Kraftfahrzeugen, welcher aus einem Halsband bzw. Riemengeschirr besteht, welches über ein Zwischenglied an einer am Kraftfahrzeug befestigten Haltevorrichtung lösbar befestigt werden kann, welcher dadurch gekennzeichnet ist, dass an dem vorzugsweise als Leine ausgebildeten Zwischenglied ein an sich bekanntes, in einem üblichen Schloss eines Kfz-Sicherheitsgurtes einrastbares Schliessglied befestigt ist.

Um den erfindungsgemässen Schutz- bzw. Haltegurt im jeweiligen Kraftfahrzeug sicher befestigen zu können, ist lediglich notwendig, dass die Hintersitze – was an sich sowieso wünschenswert ist – mit üblichen Haltegurten ausgerüstet sind. Wenn das der Fall ist, kann das jeweils zu transportierende Tier durch einfaches Einrasten des Schliessgliedes im Schloss des Sicherheitsgurtes am Rücksitz sicher auf diesem festgehalten werden.

Um nun mit einer Ausführungsform der erfindungsgemässen Vorrichtung für kleinere oder grössere Tiere das Auslangen zu finden, ist es zweckmässig, dass die Leine über ihre Länge mehrere Ösen, Löcher oder dgl. aufweist, an welchen das Zwischenglied lösbar befestigt werden kann. Um dies bewerkstelligen zu können, ist an dem Schliessglied ein lösbares Zwischenglied, wie ein Karabinerhaken oder dgl., vorgesehen, welches seinerseits in den entsprechenden Ösen, Löchern oder dgl. der Leine eingehakt werden kann. Dadurch ist es möglich, dieselbe Leine sowohl für kleine als auch für grössere Tiere zu verwenden. Für diesen Zweck insbesondere geeignet sind Leinen, die als Ketten ausgebildet sind; in diesem Fall kann das Schliessglied über den Karabinerhaken praktisch an jeder Stelle der Leine befestigt werden.

Um eventuell mögliche Angriffe des Tieres auf den Fahrzeuglenker oder andere Fahrzeuginsassen zu vermeiden, genügt es, wenn das jeweilige Tier ein übliches Halsband trägt, an welchem die Leine befestigt ist. Wenn jedoch das Tier ausserdem vor möglichen Unfallfolgen geschützt werden soll, ist es zweckmässig, an Stelle des Halsbandes ein sogenanntes Riemengeschirr zu verwenden, welches ober- und unterhalb der Vorderbeine rund um den Brustkasten verläuft und wobei die Leine am dorsalen Teil des Geschirrs befestigt ist. Mit einem derartigen Geschirr können mechanische Belastungen, denen das Tier infolge des Unfalls ausgesetzt ist, leichter abgefangen werden, ohne dass es dabei zu Verletzungen bzw. im Extremfall zu einer Strangulierung des Tieres kommt.

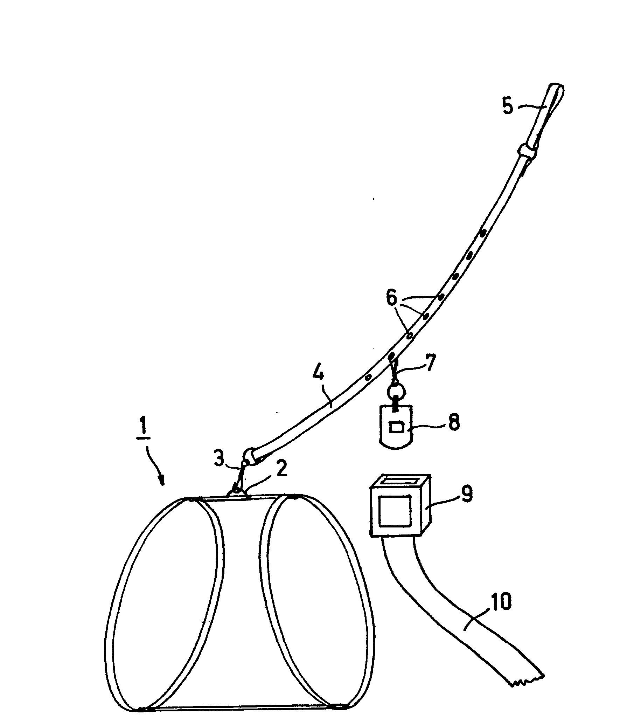

Zum besseren Verständnis des Gegenstandes der vorliegenden Erfindung sei auf die beiliegende Zeichnung verwiesen. In dieser Zeichnung bedeutet 1 ein übliches Riemengeschirr, an welchem über eine Öse oder dgl. 2 mittels eines Karabinerhakens 3 eine Leine 4 befestigt ist. Diese Leine 4 endet in einer Handschlaufe 5. Über ihre Länge sind verschiedene Löcher, Ösen oder dgl. 6 angeordnet, an welchen mittels eines Karabinerhakens 7 ein Schliessglied 8 befestigt werden kann. Dieses Schliessglied 8 passt zu einem üblichen Gurtenschloss 9, welches über einen Riemen oder dgl. 10 auf übliche Weise am Sitz oder einem anderen geeigneten Teil des Kraftfahrzeuges befestigt werden kann. Wie aus der Zeichnung leicht ersichtlich, kann das Tier durch die erfindungsgemässe Einrichtung leicht und sicher an der gewünschten Stelle des Kraftfahrzeuges festgehalten werden.

## Patentansprüche

1. Schutz- bzw. Haltegurt für Kleintiere, insbesondere Hunde, in Kraftfahrzeugen, welcher aus einem Halsband bzw. Riemengeschirr (1) besteht, welches über ein Zwischenglied (4, 7) an einer am Kraftfahrzeug befestigten Haltevorrichtung (9, 10) lösbar befestigt werden kann, dadurch gekennzeichnet, dass an dem vorzugsweise als Leine ausgebildeten Zwischenglied (4, 7) ein an sich bekanntes, in einem üblichen Schloss (9) eines Kraftfahrzeug-Sicherheitsgurtes (10) einrastbares Schliessglied (8) befestigt ist.

2. Schutz- bzw. Haltegurt nach Anspruch 1, dadurch gekennzeichnet, dass das Schliessglied (8) über ein lösbares Zwischenglied (7), wie einen Karabinerhaken oder dgl., an der Leine (4) befestigt ist.

3. Schutz- bzw. Haltegurt nach Anspruch 2, dadurch gekennzeichnet, dass die Leine (4) über ihre Länge mehrere Ösen, Löcher oder dgl. (6) aufweist, an welchen das Zwischenglied (7) befestigt werden kann.

## Revendications

1. Ceinture de protection et de retenue pour petits animaux, en particulier chiens, dans des automobiles, se composant, respectivement, d'un collier ou d'un harnais à courroies (1) pouvant être fixé, à l'aide d'un maillon (9, 7) intermédiaire détachable, à un dispositif d'attacher (9, 10) monté sur l'automobile; à ce maillon intermédiaire, qui se présente surtout sous form de laisse (4, 7), est fixé un dispositif de fermeture de type bien connu (9), encliquetable (8) dans la serrure usuelle d'une ceinture de sécurité (10) d'automobile.

2. Ceinture de protection et de sécurité selon revendication 1, caractérisée par le fait que le dispositif de fermeture (8) est fixé, à l'aide d'un maillon intermédiaire détachable (7), fixé, à l'aide d'un maillon intermédiaire détachable, tel que mousqueton, etc., a la laisse (4).

3. Ceinture de protection et de sécurité selon revendication 2, caractérisée par le fait que la laisse (4) relève de plusieurs oeillet, trous, etc. (6), sur toute la longueur, auxquels le maillon intermédiaire (7) peut être attaché.

## Claims

1. Protective and holding belt sor small animals, especially dogs, in motor vehicles, comprising a collar or a belt device resp. (1), which may be fastened separably by an intermediate member (4, 7) on a holding device (9, 10) mounted on the motor vehicle, characterized in that on the intermediate member (4, 7), preferably in form of a lead, a latch member (8) known per se is fastened, said latch member being engageable into an usual buckle (9) of a safety belt (10) of a motorvehicle.

2. Protective and holding belt of claim 1, characterized in that the latch member (8) is fastened on the lead (4) by a separable intermediate member (7), such as a snaphook or the like.

3. Protective and holding belt of claim 2, characterized in that the lead (4) comprises several eyes, holes or the like (6) over its length, on which the intermediate member (7) may be fastened.